# EUROPEAN PATENT SPECIFICATION

(11) **EP 2 177 379 B1**
(45) Date of publication and mention of the grant of the patent: **18.04.2012**
(21) Application number: 08791826.4
(22) Date of filing: 29.07.2008
(51) Int. Cl.: B60C 17/01, B60C 23/04

(54) **SAFETY TIRE**
SICHERHEITSREIFEN
PNEU DE SECOURS

(30) Priority: 02.08.2007 JP 2007202120; 22.08.2007 JP 2007215986
(43) Date of publication of application: 21.04.2010
(73) Proprietor: Bridgestone Corporation, Tokyo 104-8340 (JP)
(72) Inventor: KOUNO, Yoshihide, Kunitachi-shi Tokyo 186-0001 (JP)
(74) Representative: Whalley, Kevin
(86) International application number: PCT/JP2008/063591
(87) International publication number: WO 2009/017123

(56) References cited:
- DE-A1- 10 255 167
- JP-A- 2002 166 711
- JP-U- 50 053 804
- JP-U- 63 182 907
- US-A- 2 301 096

## Description

### Technical Field

The present invention relates to a safety tire which is capable of running for a certain distance in a run-flat state and stop safely, when a tire internal-pressure has been lowered due to a puncture or the like. In particular, the present invention relates to a safety tire which is capable of increasing the running distance in the run-flat state.

### Prior Art

A safety tire in which tire load is taken over by an air bladder, a foaming body, an elastic body, an inner ring, etc., or a safety tire in which a sealant is applied or filled to block a damaged portion such as a hole generated in the tire so as to preventing the lowering of the internal-pressure. However, these conventional safety tires have complicated structures, thereby possibly causing a situation, in which fraction defective increases and manufacture efficiency falls. Moreover, in some cases, preparation of an air valve for the air bladder or an exclusive rim having structures to attach the inner ring to the rim are needed.

As a safety tire having relatively simple structure, JP 37-1754 B, for example, describes a safety tire which has an annular diaphragm composed of an air bladder pinched between a rim and a tire or an inflatable hollow toroidal diaphragm composed of an air bladder extending between both bead portions, wherein the tire and the diaphragm define, when the tire is attached onto a rim, a cavity that is fractionated to radially inner and outer chamber. These tires run normally when the inner chamber and the outer chamber are filled with enough air, whereas, when the air deflates from the tires caused by the puncture or the like and internal-pressure has been lowered, these tires run in the run-flat state by taken over the load with an internal-pressure inside the inner chamber.

Attention is also drawn to the disclosures of DE-A-102 55 167 and US 2,301,096.

### Disclosure of the Invention

### (Problems to be solved by the Invention)

The safety tire of JP 37-1754 B, however, requires the disposition of a valve to a sidewall of the tire which is capable to fill the air to the outer chamber, and such disposition makes manufacturing process of the tire complicated, and worsens the performance of the tire such as uniformity due to an increased weight of the tire.

In order to solve the above-mentioned problems, the applicant proposed a safety tire as described in JP 2008-290556 A, which includes an inflatable annular diaphragm sandwiched between a rim and a tire where the tire and the diaphragm defines, when the tire is attached onto a rim, a cavity that is fractionated to two chambers, a radially inner chamber and a radially outer chamber, a connection part disposed on the diaphragm connecting the inner chamber with the outer chamber and controlling quantity of the airflow. The safety tire described in JP 2008-290556 A further includes an inflatable hollow toroidal diaphragm where the tire and the diaphragm defines, when the tire is attached onto a rim, a cavity that is fractionated to two chambers, radially inner and outer the chamber, a connection part disposed on the diaphragm connecting the inner chamber with the outer chamber and controlling quantity of the airflow.

Though, these safety tires are capable to run for a certain distance after the puncture or the like, in some cases, the distance to destination such as a puncture repairing station or the like exceeds the distance capable to run in the run-flat state, and therefore, there is a demand for increasing the running distance in the run-flat state.

Accordingly, an object of the present invention is to provide a safety tire which could increase the running distance in the run-flat state.

### (Means for solving the Problems)

In order to achieve the aforementioned object, a fist aspect of the present invention is a safety tire comprising: a tire body; an inflatable hollow toroidal diaphragm disposed in the tire body; the tire body comprising a pair of bead portions, a pair of sidewall portions extending on the outer side radially from the bead portions, and a tread portion extending over the respective sidewall portions; the tire body and the diaphragm defining, when attached onto a rim, a tire cavity that is fractionated to an outer chamber delimitated outside the diaphragm and an inner chamber delimitated inside the diaphragm; said diaphragm having a communicating part communicating the outer chamber with the inner chamber, when the tire and the diaphragm is attached onto a rim and said inner and outer chamber is filled with a first internal-pressure; and said communication part being closed when the internal-pressure of the outer chamber drops from the first internal-pressure beyond a second internal-pressure. In such tire having such composition, when the tire internal-pressure is suddenly lowered due to the puncture or the like and the internal-pressure of the outer chamber drops beyond a second internal-pressure, the communication part closes. Therefore, whereas the internal-pressure of the outer chamber drops rapidly and continuously, the internal-pressure of the inner chamber will be maintained and a differential pressure of the outer chamber and the inner chamber increases. As a result, the diaphragm will inflate due to the expansion of air in the inner chamber and running in the run-flat state will be enabled. In addition, when slow puncture, due to the damage of the tire, not so sudden but gradual lowering of the internal-pressure of the outer chamber occurred and when the internal-pressure of the outer chamber reaches a second internal-pressure, the communication part closes. Therefore, though the internal-pressure of the outer chamber drops continuously, the internal-pressure of the inner chamber will be maintained, and the differential pressure of the outer chamber and inner chamber will increase. As a result, an air inside the inner chamber expands and the diaphragm inflates, which will enable the running in the run-flat state. Inventor of the present invention had found that, in some cases, in conventional safety tire, even though the diaphragm inflates, the leakage of the air inside the inner chamber gradually occurs due to the disposure of the communication part. Therefore, the air bladder gradually shrinks and the distance for running in the run-flat states will get shorter. However, in the safety tire of the present invention, when running in the run-flat state, the communication part is closed, and for such reason, air leakage from the communication part is prevented and the lowering of the internal-pressure of the inner chamber is inhibited, and the distance for running in the run-flat state will get longer due to the maintenance of inflated state of the diaphragm. Moreover, the diaphragm of the safety tire of the present invention is removable from the tire, and therefore, conventional tire can be used for the safety tire of the present invention. The "first internal-pressure" herein means the air pressure filled in the inner chamber and the outer chamber which enables the normal running when the tire and the diaphragm is attached onto a rim, and preferably the air pressure is a formal internal-pressure. The "formal internal-pressure" herein means the air pressure regulated by industrial standards, regulations such as JATMA, TRA and ETRTO valid in geographical areas where the tire is manufactured, sold or used, and specified according to the load capability.

For the first aspect, the second internal-pressure is in a range of 10 to 90%, preferably in a range of 30 to 90%, of the first internal-pressure.

Moreover, for the first aspect, said outer chamber preferably has; an internal-pressure sensing means detecting internal-pressure of the outer chamber; a signal transmitting means connected to the internal-pressure sensing means transmitting the internal-pressure lowering signal, when the internal-pressure of the outer chamber drops beyond the second internal-pressure; and said communication part closes when the communication part receives the internal-pressure lowering signal.

Alternatively, for the first aspect, said inner chamber preferably has: an internal-pressure sensing means detecting internal-pressure of the inner chamber; a signal transmitting means, connected to the internal-pressure sensing means transmitting the internal-pressure lowering signal when the internal-pressure of the inner chamber drops beyond the second internal-pressure; and said communication part closes when the communication part receives the internal-pressure lowering signal.

For the first aspect, said communication part preferably closes at the differential pressure over 50 kPa.

For the first aspect, said diaphragm has a contact inhibition means arranged at least on an outer surface of a crown portion of the diaphragm, wherein the contact inhibition means interposes between the diaphragm and an inner surface of the tire at least in a part to inhibit the direct contact of the diaphragm with the inner surface of the tire, when the diaphragm is deformed to increase diameter thereof. The "crown portion" of the diaphragm herein means the area corresponding to the inner surface of the tread portion of the tire when the diaphragm is inflated and deformed. The "outer surface" of the diaphragm herein means the inner surface near the inner surface of the tire or surface radially outside.

Moreover, for the first aspect, said communication part preferably is comprised of a passage aperture penetrating through the diaphragm and a cover which opens or closes the passage aperture.

Furthermore, for the first aspect, said cover preferably is comprised of thermo-plasticity elastomer. The "thermo-plasticity elastomer" herein means a high polymer materials such as an olefin-type thermoplastic elastomer (TPO) having a rubber elasticity.

In addition, for the first aspect, thickness of said cover preferably is in a range of 0.05 mm to 2.00 mm.

Also, for the first aspect, an adhesion material preferably is applied on or pasted on said inner surface of said cover. The "inner surface of said cover" herein means the surface of the cover in the aperture side covering the aperture.

### (Effect of the Invention)

According to the present invention, it is possible to provide a safety tire which is capable of increasing the running distance in the run-flat state.

### Brief Description of the Drawings

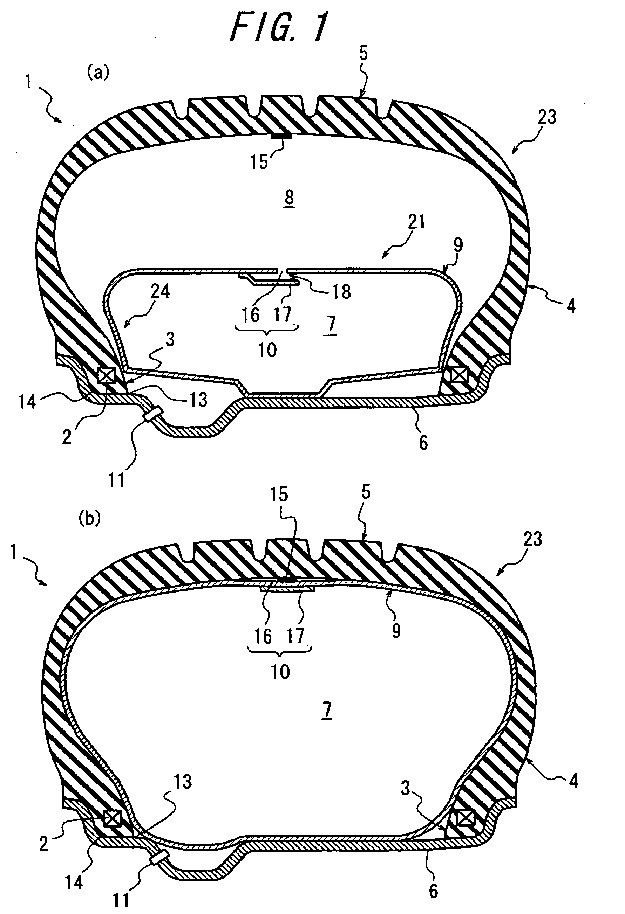

FIG. 1(a) is a sectional view in the tire widthwise direction of the tire-rim assembly, wherein a safety tire according to the first aspect of the present invention is attached onto a rim, and the assembly before or after the application of internal pressure, and FIG. 1(b) shows the other state of tire in FIG. 1(a) wherein the internal pressure of the tire has been dropped, enabling the running in a run-flat state.

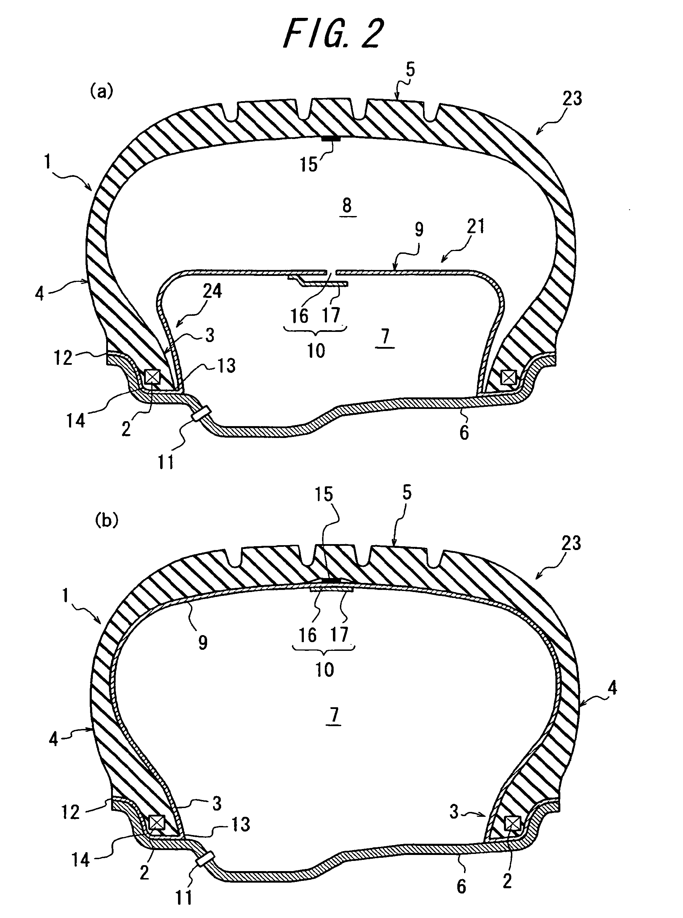

FIG. 2(a) is a sectional view in the tire widthwise direction of the tire-rim assembly, wherein a safety tire according to the second aspect of the present invention is attached onto a rim, and the assembly before or after the application of internal pressure, and FIG. 1(b) shows the other state of tire in FIG. 2(a) wherein the internal pressure of the tire has been dropped, enabling the running in a run-flat state.

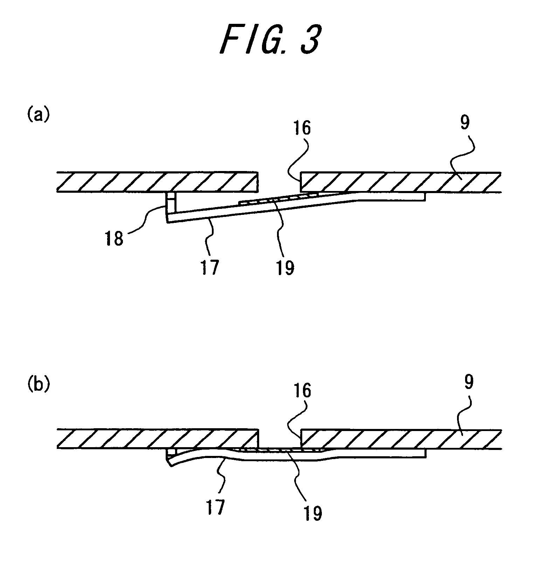

FIG. 3(a) and 3(b) show a connection part of the tire according to the present invention, wherein FIG. 3(a) shows the connection part before closing, and FIG. 3(b) shows the connection part after closing.

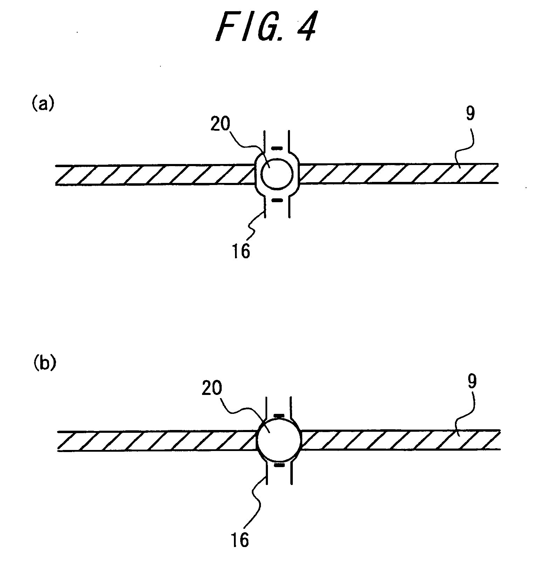

FIG. 4(a) and 4(b) show a connection part of the tire according to the other aspect of the present invention, wherein FIG. 4(a) shows the connection part before closing, and FIG. 4(b) shows the connection part after closing.

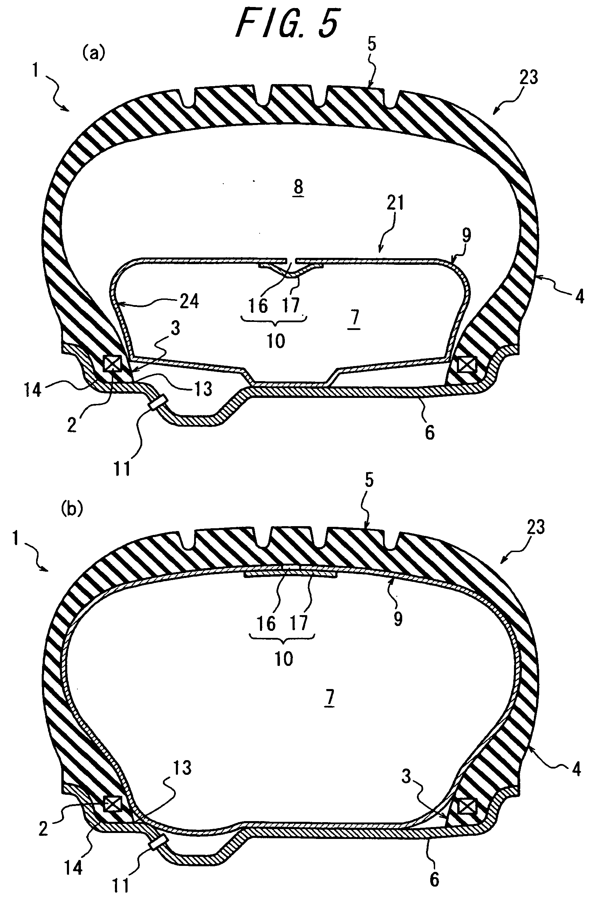

FIG. 5(a) is a sectional view in the tire widthwise direction of the tire-rim assembly, wherein a safety tire according to the third aspect of the present invention is attached onto a rim, and the assembly before or after the application of internal pressure, and FIG. 1(b) shows the other state of tire in FIG. 5(a) wherein the internal pressure of the tire has been dropped, enabling the running in a run-flat state.

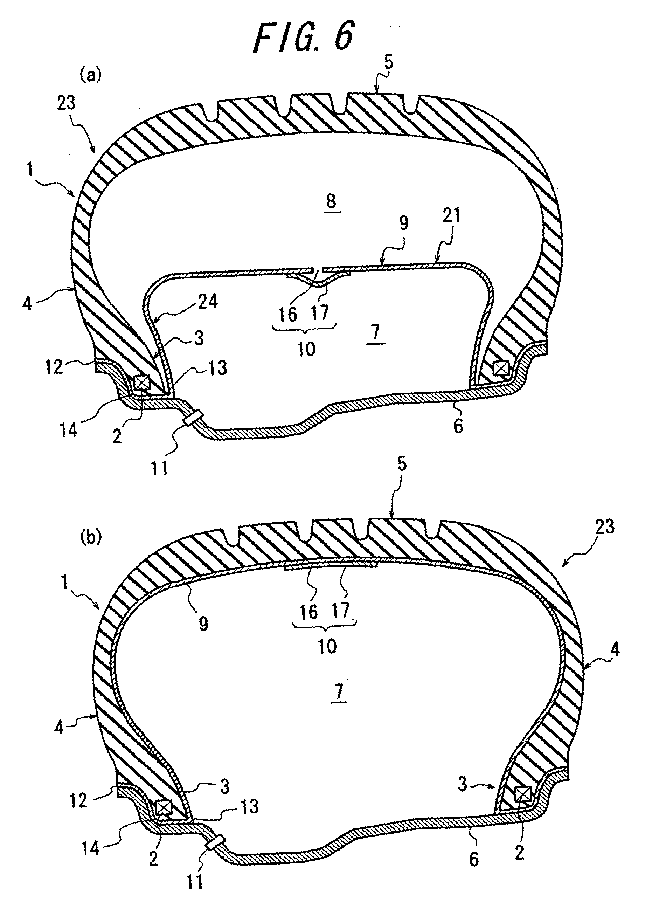

FIG. 6(a) is a sectional view in the tire widthwise direction of the tire-rim assembly, wherein a safety tire according to the fourth aspect of the present invention is attached onto a rim, and the assembly before or after the application of internal pressure, and FIG. 6(b) shows the other state of tire in FIG. 6(a) wherein the internal pressure of the tire has been dropped, enabling the running in a run-flat state.

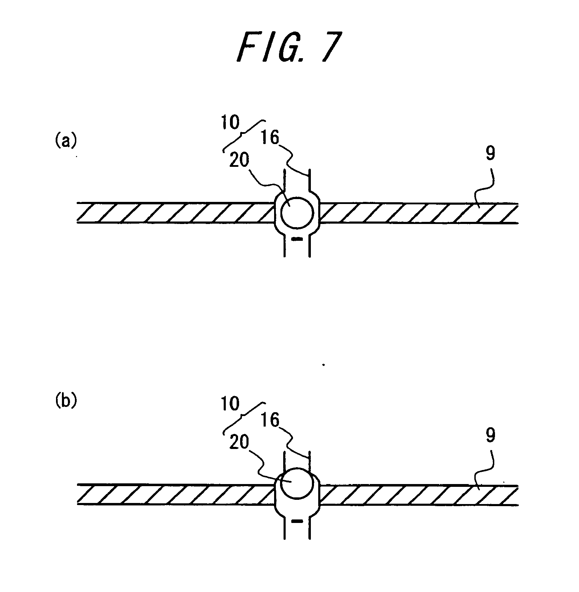

FIG. 7(a) and 7(b) show a connection part of the tire according to the other aspect of the present invention, wherein FIG. 7(a) shows the connection part before closing, and FIG. 7(b) shows the connection part after closing.

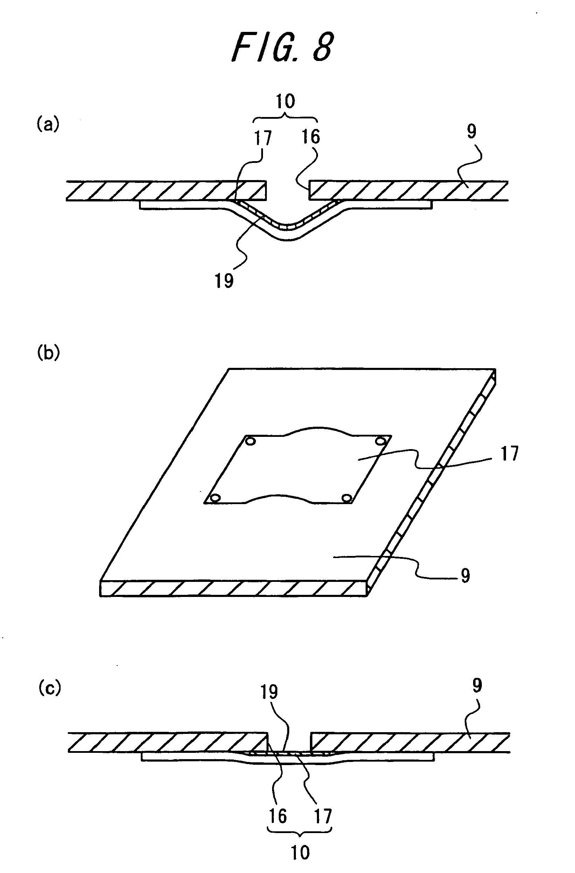

FIG. 8(a) and 8(b) show a connection part of the tire according to the other aspect of the present invention, wherein FIG. 8(a) is a sectional view in the tire widthwise direction of the connection part before closing, and FIG. 8(b) is a perspective view of the connection part, seen from the inner chamber side of the diaphragm before closing, and FIG. 8(c) is a sectional view in the tire widthwise direction of the connection part after closing.

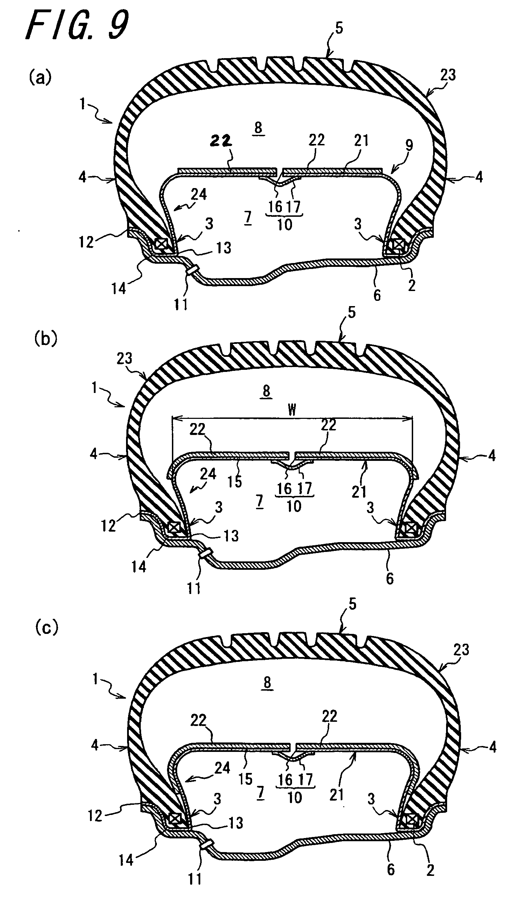

FIG. 9(a) to FIG. 9(c) are a sectional view in the tire widthwise direction of the tire-rim assembly, wherein a safety tire according to the present invention is attached onto a rim, and the assembly before or after the application of internal pressure.

### (Explanation of Reference Numerals)

- 1: Tire
- 2: Bead core
- 3: Bead portion
- 4: Sidewall portion
- 5: Tread portion
- 6: Rim
- 7: Inner chamber
- 8: Outer chamber
- 9: Diaphragm
- 10: Connection part
- 11: Air filling valve
- 12: Edge portion of diaphragm
- 13: Bead toe
- 14: Bead heel
- 15: Internal-pressure sensing means
- 16: Passage aperture
- 17: Cover
- 18: Separating means
- 19: Adhesive
- 20: Floating part
- 21: Crown portion of the diaphragm
- 22: Contact inhibition means
- 23: Shoulder portion
- 24: Side portion of diaphragm
- W: Maximum edge portion of diaphragm

### Best Mode for carrying out the Invention

Hereinafter, a safety tire (hereinafter referred to as a "tire") of the first and second aspects of the present invention will be described with reference to the drawings. FIG. 1(a) is a sectional view in the tire widthwise direction of the tire-rim assembly, wherein a safety tire according to the first aspect of the present invention is attached onto a rim, and the assembly before or after the application of internal pressure, and FIG. 1 (b) shows the other state of tire in FIG. 1(a) wherein the internal pressure of the tire has been dropped, enabling the running in a run-flat state. FIG. 2(a) is a sectional view in the tire widthwise direction of the tire-rim assembly, wherein a safety tire according to the second aspect of the present invention is attached onto a rim, and the assembly before or after the application of internal pressure, and FIG. 1(b) shows the other state of tire in FIG. 2(a) wherein the internal pressure of the tire has been dropped, enabling the running in a run-flat state.

A tire 1 according to the first aspect of the present inventionis shown in FIG. 1, and comprises a pair of bead portions 3 embedded with bead core 2, a pair of sidewall portions 4 extending on the outer side radially from the bead portions 3, and a tread portion 5 extending over the respective sidewall portions 4,4. Though not shown, the tire 1 also has other constructional elements of the tire, such as a carcass, a belt, etc., in accordance with conventional practice.

The tire shown in FIG. 1 has an inflatable hollow toroidal diaphragm 9 disposed in the tire 1 in all circumferences, and the diaphragm 9 defines, when the tire 1 is attached onto the rim 6 and the diaphragm 9 is in contact with the rim 6, a tire cavity that is fractionated to an outer chamber 8 delimitated radially outside the diaphragm 9 and an inner chamber 7 delimitated radially inside the diaphragm 9. The diaphragm 9, when the tire 1 is attached onto the rim 6 and is filled with first internal-pressure, the communication part 10 communicates the inner chamber 7 with outer chamber 8. The diaphragm 9 has a communicating part 10 communicating the outer chamber 8 with the inner chamber 7, when the tire 1 is attached onto the rim 6 and the inner 7 and outer chamber 8 is filled with a first internal-pressure. The communication part 10 communicates, when the tire 1 is attached onto the rim 6, the inner chamber 7 with the outer chamber 8 before filling first internal pressure, and therefore, by filling air to the outer chamber 8 via air filling valve 11 disposed on the rim 6, a part of the air will be filled to the inner chamber 7 via communication part 10 and the air is filled inside both inner chamber 7 and outer chamber 8. Therefore, the preparation of the air filling valve for filling the inner chamber 7 is not needed, and conventional rim 6 can be used for the present invention. The communication part 10 will close when the internal-pressure of the outer chamber 8 drops from the first internal-pressure beyond a second internal-pressure. Note that diaphragm 9 is separated from the tire body and there are no needs to use the special tire, and therefore, conventional tire 1 can be used.

A tire 1 according to the second aspect of the present inventions shown in FIG. 2, and comprises a pair of bead portions 3 embedded with bead core 2, a pair of sidewall portions 4 extending on the outer side radially from the bead portions 3, and a tread portion 5 extending over the respective sidewall portions 4,4. Though not shown, the tire 1 also has other constructional elements of the tire, such as a carcass, a belt, etc., in accordance with conventional practice. The tire also has an inflatable annular diaphragm 9 disposed in the tire 1 along whole circumference. The diaphragm 9 defines, when the tire 1 is attached onto the rim 6 and the diaphragm 9 is pinched between the bead portion 3 and rim 6, a tire cavity that is fractionated to an outer chamber 8 delimitated radially outside the diaphragm 9 near the inner surface of the tire 1 and an inner chamber 7 delimitated radially inside the diaphragm 9 near the rim 6. An edge portion 12 on the outer side in the tire widthwise direction of diaphragm 9 extends through the bead toe 13 of the bead portion 3 and also through at least a bead heel 14. The diaphragm 9 has a communicating part 10 communicating the outer chamber 8 with the inner chamber 7, when the tire 1 is attached onto the rim 6 and the inner 7 and outer chamber 8 is filled with a first internal-pressure. The communication part 10 communicates, when the tire 1 is attached onto the rim 6, the inner chamber 7 with the outer chamber 8 before filling first internal pressure, and therefore, by filling air to the outer chamber 8 via air filling valve 11 disposed on the rim 6, a part of the air will be filled to the inner chamber 7 via communication part 10 and the air is filled inside both inner chamber 7 and outer chamber 8. Therefore, the preparation of the air filling valve for filling the inner chamber 7 is not needed, and conventional rim 6 can be used for the present invention. The communication part 10 will close when the internal-pressure of the outer chamber 8 drops from the first internal-pressure beyond a second internal-pressure.

Note that, the communication part 10 mentioned above communicates the inner chamber 7 with the outer chamber 8, for example, before running including when the tire 1 is attached onto the rim 6, independent from the internal- pressure of the tire 1, whereas, at the beginning of the running, the communication part closes disabling the communication of the inner chamber and the outer chamber when the internal-pressure of outer chamber dropped beyond the second internal-pressure. Alternatively, the communication part 10 will, when separating tire 1 and rim 6 or before running as mentioned above, forcibly communicates the inner chamber 7 with the outer chamber 8 with each other by the signal, whereas after the tire 1 is filled with predetermined internal-pressure and by stopping the signal, the inner chamber 7 and the outer chamber 8 will not communicate.

The tires of the first and second aspects of the invention, when in the normal state of the internal-pressure as shown in FIGS. 1(a) and 2(a), assume the state wherein the diaphragm 9 is not in contact with the inner surface of the tread portion 5, and therefore, the diaphragm will not be damaged due to the friction or the like. Note that, even though the internal-pressure of the outer chamber suddenly dropped, air flow from the inner chamber 7 to the outer chamber 8 via communication part 10 is restricted, and therefore, the diaphragm 9 inflates due to the increase of the differential pressure before the sudden lowering of the internal-pressure inside the inner chamber 7. Moreover, communication part 10 closes when the internal-pressure of the outer chamber reaches the second internal-pressure, and therefore, internal-pressure of the inner chamber 7 will not drop and will be maintained, even though internal-pressure of the outer chamber 8 dropped suddenly. For such reason, differential pressure of inner chamber 7 and outer chamber 8 increases and air inside the inner chamber 7 increases to inflate the diaphragm 9. As a result, tires 1 of first and second aspects of the present invention will be in the state such that diaphragm 9 is in contact with the inner surface of the tire, as shown in FIGS. 1(b) and 2(b) respectively. In accordance with it, the tire load is taken over by the air inside the inner chamber 7 which enables a safe running in the run-flat state.

In conventional safety tire, a diaphragm will not inflate enough and the tire can not run in the run-flat state, when slow puncture, due to the damage of the tire, not so sudden but gradual lowering of the internal-pressure of the outer chamber occurred. Because, when the air inside the outer chamber decrease gradually, state that enables the air flow through the communication part will be maintained and air inside the inner chamber decreases gradually, and therefore, internal-pressure of the inner chamber decreases gradually. As a result, differential pressure of inner chamber and outer chamber is not maintained diaphragm will not inflate enough. However, in the tire 1 of the first aspect of the present invention, when the slow puncture occurred and internal-pressure of inner chamber 7 and outer chamber 8 decreases gradually, the communication part closes when the internal-pressure of the outer chamber 8 reaches a second internal-pressure. Therefore, though the internal-pressure of the outer chamber drops gradually and continuously, the internal-pressure of the inner chamber will be maintained, and the differential pressure of the outer chamber 8 and inner chamber 7 will increase. As a result, an air inside the inner chamber 7 expands and the diaphragm 9 inflates contacting the inner surface of the tire, as shown in FIGS. 1(b) and 2(b) respectively illustrating the tires 1 of first and second aspects of the present invention. In accordance with it, the tire load is taken over by the air inside the inner chamber 7 which enables a safe running in the run-flat state. In such state, communication part 10 is closed, and for such reason, air leakage from the communication part 10 is prevented and the lowering of the internal-pressure of the inner chamber 7 is inhibited, and the distance for running in the run-flat state will get longer due to the maintenance of inflated state of the diaphragm 9. As such, these tires 1 of the first and second aspects of the present invention are capable of increasing the running distance in the run-flat state by inflating the diaphragm 9 enough, not only when the puncture or the like causing the sudden lowering of the internal-pressure occurred, but also when the slow puncture causing the gradual lowering of the internal-pressure.

Moreover, the second internal-pressure is preferably in a range of 10 to 90%, more preferably in a range of 30 to 90%, of the first internal-pressure. When the second internal-pressure is below 10% of the first internal-pressure, tire load will be taken over in the state which internal-pressure inside the tire 1 is too low and the tire 1 will be pushed to the road surface, and therefore, tire will be running for a certain distance in the state of excess deformation. As a result, the tire and the diaphragm may be damaged and they may not run in safe. This is remarkable in heavy load tire for the bus and trucks that significant load is burdened. In particularly, in usual passenger tire, the second internal-pressure is preferably over 30% of the first internal-pressure, and in usual heavy load tire, the second internal-pressure is preferably over 50% of the first internal-pressure. Moreover, in usual, air leakage occurs due to the rolling of the tire. In accordance with it, when the second internal-pressure is over 90% of the first internal-pressure, the diaphragm 9 will gradually inflate due to the closure of communication part 10 caused by the air leakage due to the rolling of the tire, though tire 1 has not been damaged.

Furthermore, for both the tires 1 of first and the second aspects of the present invention, the outer chamber 8 preferably has; an internal-pressure sensing means 15 detecting internal-pressure of the outer chamber 8; a signal transmitting means connected to the internal-pressure sensing means 15 transmitting the internal-pressure lowering signal, when the internal-pressure of the outer chamber 8 drops beyond the second internal-pressure; and the communication part 10 closes when the communication part 10 receives the internal-pressure lowering signal. With such composition, when the slow puncture occurred, the internal-pressure sensing means 15 precisely detects the dropping of the internal-pressure of the outer chamber 8 beyond the second internal-pressure and at the same time, the signal transmitting means transmit the internal-pressure lowering signal to the communication part 10 and the communication part 10 receives the signal, and then the communication part 10 closes rapidly. Note that, direct-type TPMS (Tire Pressure Monitoring System) is known as a representative example. The direct-type TPMS can be disposed inside the tire 1 to directly detect the internal-pressure of the tire 1 in high accuracy and alerting the lowering of the internal-pressure.

Alternatively, the outer chamber 8 preferably has: an internal-pressure sensing means 15 detecting internal-pressure of the outer chamber 8; a signal transmitting means connected to the internal-pressure sensing means 15 transmitting the internal-pressure lowering signal; and the communication part 10 closes when the communication part 10 receives the internal-pressure lowering signal that indicates the drop of the internal-pressure of the outer chamber 8 beyond the second internal-pressure. With such composition, when the slow puncture occurred, the internal-pressure sensing means 15 continuously transmit the information signal of the internal-pressure, and the communication part 10 closes rapidly when the communication part 10 receives the internal-pressure lowering signal that indicates the drop of the internal-pressure of the outer chamber 8 beyond the second internal-pressure.

Alternatively, the inner chamber 7 preferably has: an internal-pressure sensing means 15 detecting internal-pressure of the inner chamber 7; a signal transmitting means, connected to the internal-pressure sensing means 15 transmitting the internal-pressure lowering signal when the internal-pressure of the inner chamber 7 drops beyond the second internal-pressure; and the communication part 10 closes when the communication part 10 receives the internal-pressure lowering signal. With such composition, when the slow puncture occurred, the internal-pressure sensing means 15 precisely detects the drop of the internal-pressure of the inner chamber 7 beyond the second internal-pressure and at the same time, the signal transmitting means transmit the internal-pressure lowering signal to the communication part 10 and the communication part 10 receives the internal-pressure lowering signal, and then the communication part 10 closes rapidly. Moreover, in the case of the safety tire having annular diaphragm, the internal-pressure sensing means 15 can be disposed on the rim 6 with ease.

Alternatively, the inner chamber 7 preferably has: an internal-pressure sensing means 15 detecting internal-pressure of the inner chamber; a signal transmitting means connected to the internal-pressure sensing means 15 transmitting the internal-pressure lowering signal; and the communication part 10 closes when the communication part 10 receives the internal-pressure lowering signal that indicates the drop of the internal-pressure of the inner chamber 7 beyond the second internal-pressure. With such composition, when the slow puncture occurred, the internal-pressure sensing means 15 continuously transmit the information signal of the internal-pressure, and the communication part 10 closes rapidly when the communication part 10 receives the internal-pressure lowering signal that indicates the drop of the internal-pressure beyond the second internal-pressure.

Moreover, as shown in FIGS. 1 and 2, the communication part 10 of the tire 1 of the first and second aspects of the invention preferably is comprised of a passage aperture 16 penetrating through the diaphragm 9 and a cover 17 which opens or closes the passage aperture 16. In such composition, as shown in FIGS. 1(a) and 2(a), communication part 10 closes when the outer chamber 8 at the first internal-pressure. Moreover, as shown in FIGS. 1(b) and 2(b), when the tire 1 is damaged due to the puncture or the like causing the lowering of the internal-pressure of the outer chamber 8, cover 17 covers the passage aperture 16 to inhibit the air flow via passage aperture 16 when the internal-pressure of the outer chamber 8 drop beyond the second internal-pressure. Therefore, the differential pressure of the inner chamber 7 and the outer chamber 8 increases and such increase will inflates the diaphragm which enables the running in the run-flat state. Particularly, tire 1 of the second aspect of the invention is produced with the size of 495/45R22.5, and the first internal-pressure is set to be 900kPa and the second internal-pressure is set to be 800kPa. The cover 17 of the communication part 10 is made of TPO with a thickness of 1 mm and Young's modulus of 5MPa. Also, a bar-shaped separating means 18 is disposed between the cover 17 and the diaphragm 9, which would separate the passage aperture 16 and cover 17 in the tire radial direction when the first internal-pressure is filled in. Such separating mean 18 will flex in tire circumferential direction due to the supply of electric energy, when the internal-pressure of the outer chamber 8 is beyond the second internal-pressure, and receives the internal-pressure lowering signal from the internal-pressure sensing means 15. As a result, the cover 17 covers the passage aperture 16 and the passage aperture 16 will be closed.

Alternatively, as shown in FIG. 3, the communication part 10 of the tires 1 of the first and second aspects of the present invention can preferably changed to the communication part 10 having the cover applied on or pasted on to the inner surface with an adhesion material 19. As shown in FIG. 3(a), by disposing adhesion material 19, when the internal-pressure of the outer chamber 8 has been lowered beyond the second internal-pressure due to the puncture or the like and when the cover 17 closes the passage aperture 16, as shown in FIG. 3(b), adhesion material 19 will stick around the passage aperture 16 to further inhibit the air leakage and running distance in the run-flat state will increase. Note that, for example, a modacrylic/synthetic resin-type adhesive tape, a modacrylic/synthetic resin-type adhesive agent or a modacrylic/synthetic resin-type adhesive sponge can be used as the adhesion material 19.

The foregoing description only explain a part of the embodiments of the present invention. The structures described above may be combined with each other or subjected to various modifications, unless such combination or modification digresses the spirit of the present invention. For example, the communication part 10 is not limited to the embodiment as shown in FIGS. 1 to 3, and can be composed of, as shown in FIG. 4, floating chuck type having passage aperture 16 and floating part 20 which communicates the air. The tire 1 having such communication part 10, as shown in FIG. 4(a), will be able to communicate air via passage aperture 16 due to the small diameter of floating part 20 when filled with the first internal-pressure. Also, when the puncture or the like occurred and the intemal-pressure of the outer chamber 8 has been lowered beyond the second internal-pressure, as shown in FIG. 4(b), the floating part 20 will expand in diameter and passage aperture 16 closes. Note that, floating part 20 will expand in diameter, when the internal-pressure of the outer chamber 8 reaches the second internal-pressure, and the internal-pressure lowering signal from the signal transmitting means of the internal-pressure sensing means 15 will be received on the communication part 10 and the floating part 20 is supplied with an electrical energy to expand itself. Moreover, FIG. 3 shows the cover 17 which is disposed radially inside the passage aperture 16, but the cover 17 can be disposed radially outside the passage aperture 16. Furthermore, when filling pressure inside the tire, a pressure fluctuation pattern is led based on the data such as differentiation values of timewise internal-pressure data (a slope) of outer chamber 8 detected by the internal-pressure sensing means 15, and when the outer chamber 8 shows said pressure fluctuation pattern, it is set to let the inner chamber 7 and the outer chamber 8 communicate each other, even though the internal pressure of the outer chamber 8 is lower than the second internal-pressure. In addition, as shown in FIG. 1, closing the communication part 10 can be achieved by the composition separately comprising internal-pressure sensing means 15 and means to receive internal-pressure lowering signal receiving and close the communication part 10, but composition, not shown, integrally comprising internal-pressure sensing means 15 and means to receive internal-pressure lowering signal receiving and close the communication part 10 can also be used. Moreover, the communication part 10 can be changed to a general electric-type or a mechanical-type opening and shutting valve.

Hereinafter, a tire of the third and fourth aspects of the present invention will be described with reference to the drawings. FIG. 5(a) is a sectional view in the tire widthwise direction of the tire-rim assembly, wherein a safety tire according to the first aspect of the present invention is attached onto a rim, and the assembly before or after the application of internal pressure, and FIG. 5(b) shows the other state of tire in FIG. 5(a) wherein the internal pressure of the tire has been dropped, enabling the running in a run-flat state. FIG. 6(a) is a sectional view in the tire widthwise direction of the tire-rim assembly, wherein a safety tire according to the second aspect of the present invention is attached onto a rim, and the assembly before or after the application of internal pressure, and FIG. 6(b) shows the other state of tire in FIG. 6(a) wherein the internal pressure of the tire has been dropped, enabling the running in a run-flat state.

The tires 1 according to the third and fourth aspects of the present invention, as shown in FIG. 5 and 6, each comprises a pair of bead portions 3 embedded with bead core 2, a pair of sidewall portions 4 extending on the outer side radially from the bead portions 3, and a tread portion 5 extending over the respective sidewall portions 4, 4. Though not shown, the tire 1 also has other constructional elements of the tire, such as a carcass, a belt, etc., in accordance with conventional practice.

The tire shown in FIG. 5 has an inflatable hollow toroidal diaphragm 9 disposed in the tire 1 in all circumferences, and the diaphragm 9 defines, when the tire 1 is attached onto a rim 6 and the diaphragm 9 is in contact with the rim 6, a tire cavity that is fractionated to an outer chamber 8 delimitated radially outside the diaphragm 9 and an inner chamber 7 delimitated radially inside the diaphragm 9. The diaphragm 9, when the tire 1 is attached onto the rim 6 and is filled with normal internal-pressure, the communication part 10 communicates the inner chamber 7 with the outer chamber 8. The diaphragm 9 has a communicating part 10 communicating the outer chamber 8 with the inner chamber 7, when the tire 1 is attached onto a rim 6 and the inner 7 and outer chamber 8 is filled with a normal internal-pressure, and therefore, by filling air to the outer chamber 8 via air filling valve 11 disposed on the rim 6, a part of the air will be filled to the inner chamber 7 via communication part 10 and the air is filled inside both inner chamber 7 and outer chamber 8. Therefore, the preparation of the air filling valve for filling the inner chamber 7 is not needed, and conventional rim 6 can be used for the present invention. The communication part 10 will close when the internal-pressure of the outer chamber 8 drops from the first internal-pressure beyond a second internal-pressure. Note that, diaphragm 9 is separated from the tire body and there are no needs to use the special tire, and therefore, conventional tire 1 can be used.

The tires 1 according to the fourth aspect of the present invention, as shown in FIG. 6, each has an inflatable annular diaphragm 9 disposed in the tire 1 along the circumference. The diaphragm 9 defines, when the tire 1 is attached onto a rim 6 and the diaphragm 9 is pinched between the bead portion 3 and rim 6, a tire cavity that is fractionated to an outer chamber 8 delimitated radially outside the diaphragm 9 near the inner surface of the tire 1 and an inner chamber 7 delimitated radially inside the diaphragm 9 near the rim 6. An edge portion 12 on the outer side in the tire widthwise direction of diaphragm 9 extends through the bead toe 13 of the bead portion 3 and also through at least a bead heel 14. The diaphragm 9 has a communicating part 10 communicating the outer chamber 8 with the inner chamber 7, when the tire 1 is attached onto a rim 6 and the inner 7 and outer chamber 8 is filled with a normal internal-pressure. The communication part 10 communicates, when the tire 1 is attached onto the rim 6, the inner chamber 7 with the outer chamber 8 before filling normal internal pressure, and therefore, by filling air to the outer chamber 8 via air filling valve 11 disposed on the rim 6, a part of the air will be filled to the inner chamber 7 via communication part 10 and the air is filled inside both inner chamber 7 and outer chamber 8. Therefore, the preparation of the air filling valve for filling the inner chamber 7 is not needed, and conventional rim 6 can be used for the present invention. The communication part 10 will close due to the force of the differential pressure when the internal-pressure of the outer chamber 8 has been lowered by the puncture or the like and the differential pressure of inner chamber 7 and outer chamber 8 has increased over a predetermined value.

In the tires of the third and fourth aspects of the invention, in their normal state of the internal-pressure as shown in FIGS. 5(a) and 5(a), assume the state wherein the diaphragm 9 is not in contact with the inner surface of the tread portion 5, and therefore, the diaphragm will not be damaged due to the friction or the like. Note that, when the internal-pressure of the outer chamber 8 suddenly drops due to the puncture or the like and the internal-pressure of the outer chamber 8 gets lower than the internal-pressure of the inner chamber 7, and when the differential pressure of inner chamber 7 and outer chamber 8 reaches the predetermined value of differential pressure, though the internal-pressure of the outer chamber 8 continuously decreases, the air flow from inner chamber 7 to outer chamber 8 via communication part 10 is restricted due to the closure of the communication part 10 caused by the force of the differential pressure. For such reason, differential pressure of inner chamber 7 and outer chamber 8 increases and air inside the inner chamber 7 increases to inflate the diaphragm 9. As a result, tires 1 of first and second aspects of the present invention will be in the state such that diaphragm 9 is in contact with the inner surface of the tire, as shown in FIGS. 5(b) and 5(b) respectively. In accordance with it, the tire load is taken over by the air inside the inner chamber 7 which enables a safe running in the run-flat state. In such state, communication part 10 is closed, and for such reason and diaphragm is inflated, and therefore, air leakage from the communication part 10 is prevented and the lowering of the internal-pressure of the inner chamber 7 is inhibited, and the distance for running in the run-flat state will get longer due to the maintenance of inflated state of the diaphragm 9. Although, the communication part 10 can be disposed in any part of the diaphragm 9, from the point of view of tire uniformity, disposing on the equatorial plane of the diaphragm 9 is preferred.

Moreover, the communication part 10 preferably closes at the differential pressure over 50 kPa. The internal-pressure will gradually decrease due to the rotation of the tire with a load applied thereon, even though the puncture or the like has not been occurred. Therefore, if the communication part 10 closes at the differential pressure less or equal 50 kPa, the communication part 10 closes without the occurrence of the puncture or the like and air flow between the inner chamber 7 and outer chamber 8 via communication part 10 will be prevented. According to the prevention of the air flow, heat circulation between the inner chamber 7 and outer chamber 8 is inhibited and temperature inside the outer chamber 8 will rise. As a result, there is a possibility that, heat radiation from the rim 6 near the inner chamber 7 is inhibited and the temperature inside the outer chamber 8 will excessively increase, and therefore, a heat will excessively accumulate at the tread portion, etc. and the tire 1 will be destroyed with the heat. Moreover, filling the air inside the tire 1 will be difficult due to the closure of the communication part 10.

Alternatively, the communication part 10 of the tires 1 of the third and fourth aspects of the present invention, as shown in FIGS. 5 and 6, can be composed of, as shown in FIGS. 7(a) and 7(b), a passage aperture 16 penetrating the diaphragm 9 and a floating part 20 disposed on the passage aperture 16 which opens or closes the passage aperture 16. The communication part 10 is, for example, when the outer chamber 8 is in the normal internal-pressure, as shown in FIG. 7(a), open because the floating part 20 is not closing the passage aperture 16. And then, when the internal-pressure of the outer chamber 8 has been lowered and the differential pressure of inner chamber 7 and outer chamber 8 reaches the predetermined value due to the breakage of the tire 1 with the puncture or the like, as shown in FIG. 7(b), air flow via passage aperture 16 is inhibited due to the closure of the passage aperture 16 caused by the moving of the floating part 20 to the outer chamber 8 side with the pressing force. Therefore, the differential pressure of the inner chamber 7 and the outer chamber 8 increases and such increase will efficiently inflate the diaphragm which enables the increase of the running distance in the run-flat state.

Alternatively, the communication part 10 of the tires 1 of the third and fourth aspects of the present invention, as shown in FIGS. 5 and 6, can be composed of, as shown in FIGS. 8(a) to 8(c), a passage aperture 16 penetrating the diaphragm 9 and a cover 17 disposed on the passage aperture 16 at the inner surface of the diaphragm which opens or closes the passage aperture 16. The communication part 10 is, for example, when the outer chamber 8 is in the normal internal-pressure, as shown in FIGS. 8(a) and 8(b), open because the cover 17 is disposed on the passage aperture 16 at inner chamber 7 side of the diaphragm 9. And then, when the internal-pressure of the outer chamber 8 has been lowered and the differential pressure of inner chamber 7 and outer chamber 8 reaches the predetermined value due to the breakage of the tire 1 with the puncture or the like, as shown in FIG. 8(c), air flow via passage aperture 16 is inhibited due to the closure of the passage aperture 16 caused by the deformation of the cover 17 to the outer chamber 8 side with a force of the differential pressure. Therefore, the differential pressure of the inner chamber 7 and the outer chamber 8 increases and such increase will efficiently inflate the diaphragm which enables the increase of the running distance in the run-flat state. In addition, miniaturization and light-weighting of the communication part 10 can be accomplished because the configuration of the communication part 10 composed of the passage aperture 16 and the cover 17 is simple. Due to the miniaturization and light-weighting of the communication part 10, deterioration of uniformity and generation of a creep with a centrifugal force may be inhibited. Furthermore, simple configuration leads to the reduction of the manufacturing cost. Note that, a spot heat adhesion, a modacrylic/synthetic resin-type adhesive tape, a modacrylic/synthetic resin-type adhesive agent or a modacrylic/synthetic resin-type adhesive sponge can be used for the attachment of the cover 17 to the diaphragm 9. Also, when applying the spot heat adhesion to attach the cover 17 to the diaphragm 9, from the point of view of adhesive property, the diaphragm and the cover 17 are preferred to be made from a same material.

Moreover, as shown in FIG. 8, an adhesion material 19 preferably is applied on or pasted on to the inner surface of the cover 17 of the communication part 10. By disposing adhesion material 19, when the internal-pressure of the outer chamber 8 has been lowered beyond the predetermined internal-pressure and when the cover 17 had closed the passage aperture 16, adhesion material 19 will stick around the passage aperture 16 to further inhibit the air leakage, and therefore, the running distance in the run-flat state will increase.

Furthermore, in the tire of the fourth aspect of the invention as shown in FIGS. 9(a) to 9(c), the diaphragm 9 preferably has a contact inhibition means 22 arranged at least on an outer surface of a crown portion 21 of the diaphragm 9, wherein the contact inhibition means 22 interposes between the diaphragm 9 and an inner surface of the tire 1 at least in a part to inhibit the direct contact of the diaphragm 9 with the inner surface of the tire 1, when the diaphragm 9 is deformed to increase diameter thereof. The contact inhibition means 22 were arranged on the crown portion 21 which correspond to the region of tread portion where a sharp contaminant such as a nail or the like will comparatively stick, and therefore, even if penetrating hole were made to the tread portion 5 by nail stepping, there are no danger of the nail reaching the diaphragm 9 and damaging the diaphragm 9.

Provision of the contact inhibition means 22 only on an external surface of the crown portion 21 of diaphragm 9 enables to obtain a significant effects, however, as shown in FIG. 9(b), it is preferable to provide the contact inhibition means 22 to the maximum edge portion W on the outer side in the tire widthwise direction of diaphragm 9. This is because the diaphragm 9 can be prevented from getting damaged when shoulder portion 23 or the tread portion 5 of the tire 1 was stuck with the nail or the like.

Moreover, as shown in FIG. 9(c), the contact inhibition means 22 preferably is provided on the side portion 24 of the diaphragm 9 which correspond to the inner surface of the sidewall portion 4, in the states where the diaphragm 9 is inflated. This is because the diaphragm 9 corresponding to the sidewall portion 4 which is thin than the tread portion 5 and the shoulder portion 23 and the foreign materials is easy to penetrate, and therefore, the diaphragm 9 can be prevented from getting damaged.

Furthermore, the contact inhibition means 22 can be a sealant layer which is formed on the external surface of the diaphragm 9 with the sealant. This is because, when the contaminant such as the nail or the like penetrates through the tire 1 by nail stepping, the sealant layer functioning as the contact inhibition means 22 may protect the diaphragm 9 from contacting with the contaminant. Moreover, even though the contaminant had reached the diaphragm 9 and a penetrating hole has been made on the diaphragm 9, the sealant of the sealant layer will seal the penetrated hole, and therefore, maintenance of the internal-pressure will be much more reliable. Note that, the sealant material is capable of sealing a large hole generated on the shoulder portion 23 or the sidewall portion 4, for example. In such point of view, sealant is preferably formed on the side portion 24 of the diaphragm 9 which correspond to the inner surface of the sidewall portion 4. As a matter of course, sealed hole may open during tire rotation with a load applied thereon. However, at the situation mentioned above, the communication part 10 is closed and the inflated state of the diaphragm is maintained, enabling the running in the run-flat state.

Alternatively, the contact inhibition means 22 can be a buffering member made of a sponge material. This is because, when the contaminant such as the nail or the like penetrates through the tire 1 by nail stepping, the buffering member functioning as the contact inhibition means 22 may protect the diaphragm 9 from contacting with the contaminant. Moreover, the sponge material has a high damping property and a sound absorbency by converting resonance energy (vibration energy) to thermal energy that occurred in the tire cavity, in particular, in the outer chamber 8, and can inhibit a hollow resonance. Also, it is light-weighted comparing to the said sealant layer. The sponge material has a spongy porous structure, and comprises, for example, a sponge having the interconnecting cells which id made from a rubber and a synthetic resin foam, or an animal fiber, a plant fiber or a synthetic fiber connect with each other, and in particular, a rubber-type sponge or polyurethane foam are used.

Alternatively, the contact inhibition means 22 is preferable as the plural lug members which were arranged on the external surface of the diaphragm 9 which protrude to the outer side in the tire radial direction. These plural lug members only needs to function as a spacer forming a space of predetermined interval between the diaphragm 9 and the inner surface of the tire 1. Therefore, for example, a planar shape of the member can be a square, a rectangle or hexagon, and a cross-sectional shapes in a tire widthwise direction of the member can be T-shaped or cup-shaped. Or else, it can be other shape, for example, it can be conical shape. These lug members may be formed with the diaphragm 9 or it may be adhered to the diaphragm 9 with a bond after manufacturing. Material of a lug member may be the same material as the material of the diaphragm 9 or may be a different material as the material of the diaphragm 9, for example, a material with low elastic modulus soft elastomer. With such configuration, when the contaminant such as the nail or the like penetrates through the tire 1 by nail stepping, these plural lug members functioning as the contact inhibition means 22 may protect the diaphragm 9 from contacting with the contaminant.

Moreover, a sealant is preferably applied between the above-mentioned plural lug members or inside the plural lug members. With such configuration, the lug members will inhibit the deflection of sealant due to a centrifugal force occurred by running, and they will efficiently inhibit the contact between the diaphragm 9 and the inner surface of the tire 1. In addition, when the contaminant such as the nail or the like reaches the diaphragm 9, the sealant will increase the sealing property. Note that, configuration shown in FIG. 9 of the tire of the fourth aspect of the present invention can be applied to the tires of the first to fourth aspects of the present invention.

Furthermore, the cover preferably is made from TPE. The cover 17 can be made of, for example, a material having air impermeability and extensibility, such as a rubber, a complex of rubber and unwoven fabric, TPE. However, using TPE is preferable when considering the extension (breaking elongation) of the diaphragm 9 when internal-pressure of outer chamber 8 dropped, light-weighted and suppressing of a creep with a centrifugal force. Note that, such configuration can be applied also to the tires of the first and second aspects of the present invention.

In addition, the thickness of the cover 17 is preferably in a range of 0.05 mm to 2.00 mm and more preferably in a rage of 0.15 mm to 1.50 mm. When the thickness of the cover 17 is less than 0.05mm, the cover 17 is too thin, such that when the cover 17 is attached onto the diaphragm 9 using a spot heat adhesion, the heated cover 17 will completely melt and the attachment to the diaphragm 9 will be difficult. In such a case, the diaphragm will also melt and the diaphragm 9 needs to be exchanged. Considering the application of the normal internal-pressure by filling air to the inner chamber 7 and the outer chamber 8 via the communication part 10, the cover 17 needs to be rigid enough not to close the communication part 10 when filling the air. In addition, such configuration can be applied also to the tires of the first and second aspects of the present invention.

The foregoing description only explains a part of the embodiments of the present invention. The structures described above may be combined with each other or subjected to various modifications, unless such combination or modification digresses the spirit of the present invention.

### Performance Test

In order to confirm functional advantages of the invention, there were prepared test tires for heavy load having a tire size of 495/45R22.5. The test tires include safety tires according to the third and fourth aspects of the invention having an air bladder, wherein the air bladder has a communication part composed of a cover and a passage aperture, and the communication part closes when the differential pressure of an inner chamber and an outer chamber reaches the predetermined value (Example tires 1 and 2). The test tires also include a conventional safety tires having an air bladder, wherein the air bladder has a communication part composed only with a passage aperture (Control tires 1 and 2). Performance of these test tires was evaluated as described below.

Each of Example tires 1 and 2 has a structure as shown in FIGS. 5 and 6 respectively, including a diaphragm which defines a tire cavity that is fractionated to an outer chamber and an inner chamber. Here, the diaphragm comprises a communication part disposed on the equatorial plane of the diaphragm and composed of a cover and a passage aperture which communicates the inner chamber with the outer chamber near the bead portion, wherein a rubber-type adhesion material is applied on the inner surface of the cover. Example tire 1 has an inflatable hollow toroidal diaphragm, and Example tire 2 has an inflatable annular diaphragm. The diaphragm is made from TPO with a thickness of 0.3 mm and Young's modulus of 5kPa The cover of the communication part is made from TPO with a thickness of 0.15 mm, length in the tire widthwise direction of 40 mm, length in the tire circumferential direction of 40 mm and Young's modulus of 5MPa The communication part in the communicating states has a separating interval of 1 mm between the cover and the passage aperture. The passage aperture is a cylindrical hole with the diameter of 2 mm. Control tires 1 and 2 have the same structure as Example tires 1 and 2 respectively, except the cover.

For evaluating the running distance in the run-flat state, each of the test tires was assembled onto a rim having size of 17.00 x 22.5 to obtain a tire wheel, which was then mounted to a test tractor vehicle, as a driving wheel; and an air pressure of 900 kPa (relative pressure) and a load of 56.84 kN were applied.

The running distance in the run-flat state was the evaluated by measuring the time of running at the running speed of 60km/h in the run-flat state due to the puncture to the tread portion of the tire.

As a result, the internal-pressure in the inner chamber of Control tires 1 and 2 decreased gradually and the air bladder shrunk gradually, and the running time was about 10 minutes and the running distance was about 10 km. In contrast, the air bladder of Example tires 1 and 2 maintained sufficiently inflated for more than 30 minutes and the running distance was extended more than 30 km.

### Industrial Applicability

It will be appreciated from the foregoing descriptions that the present invention provides a safety tire which is capable of increasing the running distance in the run-flat state by adequately configuring the diaphragm.

## Claims

1. A safety tire (1) comprising:
a tire body;
an inflatable hollow toroidal diaphragm (9) disposed in the tire body;
the tire body comprising a pair of bead portions (3), a pair of sidewall portions (4) extending on the outer side radially from the bead portions, and a tread portion (5) extending over the respective sidewall portions;
the tire body and the diaphragm defining, when attached onto a rim (6), a tire cavity (7, 8) that is fractionated to an outer chamber (8) delimitated outside the diaphragm and an inner chamber (7) delimitated inside the diaphragm;
said diaphragm having a communicating part (10) communicating the outer chamber with the inner chamber, when the tire and the diaphragm is attached onto a rim and said inner and outer chamber is filled with a first internal-pressure; and
said communication part being closed when the internal-pressure of the outer chamber drops from the first internal-pressure beyond a second internal-pressure, wherein the second internal-pressure is in a range of 10 to 90% of the first internal-pressure.

2. The safety tire of claim 1, said outer chamber having;
an internal-pressure sensing means (15) detecting internal-pressure of the outer chamber;
a signal transmitting means connected to the internal-pressure sensing means transmitting the internal-pressure lowering signal, when the internal-pressure of the outer chamber drops beyond the second internal-pressure; and
said communication part closes when the communication part receives the internal-pressure lowering signal.

3. The safety tire of any of claims 1 or 2, wherein said inner chamber comprises:
an internal-pressure sensing means (15) detecting internal-pressure of the inner chamber;
a signal transmitting means, connected to the internal-pressure sensing means transmitting the internal-pressure lowering signal when the internal-pressure of the inner chamber drops beyond the second internal-pressure; and
said communication part closes when the communication part receives the internal-pressure lowering signal.

4. The safety tire of any of claims 1 to 3, wherein said communication part closes at a differential pressure between the inner and outer chambers of over 50 kPa.

5. The safety tire of any of claims 1 to 4, said diaphragm having a contact inhibition means (22) arranged at least on an outer surface of a crown portion (21) of the diaphragm, wherein the contact inhibition means interposes between the diaphragm and an inner surface of the tire at least in a part to inhibit the direct contact of the diaphragm with the inner surface of the tire, when the diaphragm is deformed to increase diameter thereof.

6. The safety tire of any of claims 1 to 5, wherein said communication part is comprised of a passage aperture penetrating through the diaphragm and a cover (17) which opens or closes the passage aperture.

7. The safety tire of claim 6, wherein said cover is comprised of thermo-plasticity elastomer.

8. The safety tire of claim 6 or 7, wherein thickness of said cover is in a range of 0.05 mm to 2.00 mm.

9. The safety tire of any of claims 6 to 8, wherein an adhesion material is applied on or pasted on said inner surface of said cover.

## Patentansprüche

1. Sicherheitsreifen (1), der aufweist:
eine Karkasse;
eine aufpumpbare, hohle, ringförmige Membran (9), die in der Karkasse angeordnet ist;
wobei die Karkasse aufweist: ein Paar Wulstabschnitte (3); ein Paar Seitenwandabschnitte (4), die sich auf der Außenseite radial von den Wulstabschnitten erstrecken; und einen Laufflächenabschnitt (5), der sich über die jeweiligen Seitenwandabschnitte erstreckt;
wobei die Karkasse und die Membran, wenn sie auf einer Felge (6) angebracht sind, einen Reifenhohlraum (7, 8) definieren, der in eine Außenkammer (8), die die Außenseite der Membran abgrenzt, und eine Innenkammer (7) aufgeteilt ist, die die Innenseite der Membran abgrenzt;
wobei die Membran ein Verbindungsteil (10) aufweist, das die Außenkammer mit der Innenkammer in Verbindung bringt, wenn der Reifen und die Membran auf einer Felge angebracht sind und die Innen- und Außenkammer mit einem ersten Innendruck gefüllt sind; und
wobei das Verbindungsteil geschlossen wird, wenn der Innendruck der Außenkammer vom ersten Innendruck über einen zweiten Innendruck hinaus absinkt, wobei der zweite Innendruck in einem Bereich von 10 bis 90 % des ersten Innendruckes liegt.

2. Sicherheitsreifen nach Anspruch 1, wobei die Außenkammer aufweist:
ein Innendruckmessmittel (15), das den Innendruck der Außenkammer nachweist;
ein Signalübertragungsmittel, das mit dem Innendruckmessmittel verbunden ist, das das Innendruckabsenksignal überträgt, wenn der Innendruck der Außenkammer über den zweiten Innendruck hinaus absinkt; und
wobei sich das Verbindungsteil schließt, wenn das Verbindungsteil das Innendruckabsenksignal empfängt.

3. Sicherheitsreifen nach einem der Ansprüche 1 oder 2, bei dem die Innenkammer aufweist:
ein Innendruckmessmittel (15), das den Innendruck der Innenkammer nachweist;
ein Signalübertragungsmittel, das mit dem Innendruckmessmittel verbunden ist, die das Innendruckabsenksignal überträgt, wenn der Innendruck der Innenkammer über den zweiten Innendruck hinaus absinkt; und
wobei sich das Verbindungsteil schließt, wenn das Verbindungsteil das Innendruckabsenksignal empfängt.

4. Sicherheitsreifen nach einem der Ansprüche 1 bis 3, bei dem sich das Verbindungsteil bei einem Differenzdruck zwischen der Innen- und Außenkammer von über 50 kPa schließt.

5. Sicherheitsreifen nach einem der Ansprüche 1 bis 4, bei dem die Membran ein Kontaktverhinderungsmittel (22) aufweist, die mindestens auf einer Außenfläche eines Zenitabschnittes (21) der Membran angeordnet ist, wobei das Kontaktverhinderungsmittel zwischen der Membran und einer Innenfläche des Reifens mindestens in einem Teil angeordnet ist, um einen direkten Kontakt der Membran mit der Innenfläche des Reifens zu verhindern, wenn die Membran verformt wird, um deren Durchmesser zu vergrößern.

6. Sicherheitsreifen nach einem der Ansprüche 1 bis 5, bei dem das Verbindungsteil eine Durchgangsöffnung, die durch die Membran dringt, und eine Abdeckung (17) aufweist, die die Durchgangsöffnung öffnet oder schließt.

7. Sicherheitsreifen nach Anspruch 6, bei dem die Abdeckung aus thermoplastischem Elastomer besteht.

8. Sicherheitsreifen nach Anspruch 6 oder 7, bei dem die Dicke der Abdeckung in einem Bereich von 0,05 mm bis 2,00 mm liegt.

9. Sicherheitsreifen nach einem der Ansprüche 6 bis 8, bei dem ein Adhäsionsmaterial auf die Innenfläche der Abdeckung aufgebracht oder gestrichen wird.

## Revendications

1. Bandage pneumatique de sécurité (1), comprenant :
un corps de bandage pneumatique ;
une membrane toroïdale creuse gonflable (9) agencée dans le corps du bandage pneumatique ;
le corps du bandage pneumatique comprenant une paire de parties de talon (3), une paire de parties de flanc (4) s'étendant sur le côté externe, radialement à partir des parties de talon, et une partie de bande de roulement (5) s'étendant au-dessus des parties de flanc respectives ;
le corps du bandage pneumatique et la membrane définissant, lors de leur fixation sur une jante (6), une cavité du bandage pneumatique (7, 8), divisée en une chambre externe (8) délimitée à l'extérieur de la membrane, et une chambre interne (7) délimitée à l'intérieur de la membrane ;
ladite membrane comportant une partie de communication (10), établissant une communication entre la chambre externe et la chambre interne lorsque le bandage pneumatique et la membrane sont fixés sur une jante, lesdites chambres interne et externe étant remplies d'une première pression interne ; et
ladite partie de communication étant fermée lorsque la pression interne de la chambre externe est réduite de la première pression interne au-delà d'une deuxième pression interne, la deuxième pression interne étant comprise dans un intervalle représentant 10 à 90% de la première pression interne.

2. Bandage pneumatique de sécurité selon la revendication 1, ladite chambre externe comportant :
un moyen de détection de la pression interne (15), détectant la pression interne de la chambre externe ;
un moyen de transmission d'un signal, connecté au moyen de détection de la pression interne, transmettant le signal de réduction de la pression interne lorsque la pression interne de la chambre externe est réduite au-delà de la deuxième pression interne ; et
ladite partie de communication étant fermée lorsque la partie de communication reçoit le signal de réduction de la pression interne.

3. Bandage pneumatique de sécurité selon les revendications 1 ou 2, dans lequel ladite chambre interne comprend :
un moyen de détection de la pression interne (15), détectant la pression interne de la chambre interne ;
un moyen de transmission d'un signal, connecté au moyen de détection de la pression interne, transmettant le signal de réduction de la pression interne lorsque la pression interne de la chambre interne est réduite au-delà de la deuxième pression interne ; et
ladite partie de communication étant fermée lorsque la partie de communication reçoit le signal de réduction de la pression interne.

4. Bandage pneumatique de sécurité selon l'une quelconque des revendications 1 à 3, dans lequel ladite partie de communication est fermée en présence d'une pression différentielle entre les chambres interne et externe supérieure à 50 kPa.

5. Bandage pneumatique de sécurité selon l'une quelconque des revendications 1 à 4, ladite membrane comportant un moyen empêchant un contact (22), agencé au moins sur une surface externe d'une partie de sommet (21) de la membrane, le moyen empêchant un contact étant agencé entre la membrane et une surface interne du bandage pneumatique au moins dans une partie pour empêcher le contact direct entre la membrane et la surface interne du bandage pneumatique lorsque la membrane est déformée pour accroître son diamètre.

6. Bandage pneumatique de sécurité selon l'une quelconque des revendications 1 à 5, dans lequel ladite partie de communication est constituée par une ouverture de passage pénétrant à travers la membrane, et un couvercle (17) ouvrant et fermant l'ouverture de passage.

7. Bandage pneumatique de sécurité selon la revendication 6, dans lequel ledit couvercle est composé d'un élastomère thermoplastique.

8. Bandage pneumatique de sécurité selon les revendications 6 ou 7, dans lequel l'épaisseur dudit couvercle est comprise dans un intervalle allant de 0,05 mm à 2,00 mm.

9. Bandage pneumatique de sécurité selon l'une quelconque des revendications 6 à 8, dans lequel un matériau d'adhésion est appliqué ou contrecollé sur ladite surface interne dudit couvercle.
